# EUROPÄISCHE PATENTSCHRIFT

(11) **EP 3 208 011 B1**
(45) Veröffentlichungstag und Bekanntmachung des Hinweises auf die Patenterteilung: **01.04.2020**
(21) Anmeldenummer: 16156541.1
(22) Anmeldetag: 19.02.2016
(51) Int. Cl.: B21H 3/04

(54) **TANGENTIALGEWINDEROLLKOPF**
TANGENTIAL THREAD ROLLING HEAD
TETE DE ROULAGE TANGENTIELLE

(43) Veröffentlichungstag der Anmeldung: 23.08.2017
(73) Patentinhaber: LMT Fette Werkzeugtechnik GmbH & Co. KG, 21493 Schwarzenbek (DE)
(72) Erfinder: Janke, Stefan, 23881 Koberg (DE); Lienau, Raphael, 22111 Hamburg (DE); Beben, Adam, 21031 Hamburg (DE); Gutsche, Christian, 21035 Hamburg (DE)
(74) Vertreter: Hauck Patentanwaltspartnerschaft mbB

(56) Entgegenhaltungen:
- EP-B1- 0 811 443
- CH-A- 420 031
- DE-B- 1 012 893
- US-A- 2 257 234
- US-A- 2 699 077
- US-A- 3 048 064
- US-A- 3 353 390

## Beschreibung

Die Erfindung betrifft einen Tangentialgewinderollkopf gemäß dem Oberbegriff des Anspruchs 1.

Ein derartiger Tangentialgewinderollkopf ist beispielsweise bekannt aus EP 0 811 443 B1. Dieser Tangentialgewinderollkopf hat den Vorteil, dass durch geeignete Ausbildung zusammenwirkender Klauen von Gewinderollen und Ritzeln des Getriebes sichergestellt ist, dass die Gewinderollen jeweils nur in einer einzigen definierten Drehlage in die Rollkopfarme eingebaut werden können. Der aus EP 0 811 443 B1 bekannte Tangentialgewinderollkopf kann insbesondere zueinander verschwenkbare Rollkopfarme besitzen. Es sind andererseits auch Tangentialgewinderollköpfe mit feststehenden, also nicht zueinander verschwenkbaren Rollkopfarmen bekannt. Beispielsweise zeigt die SU 654338 A1 einen solchen Tangentialgewinderollkopf.

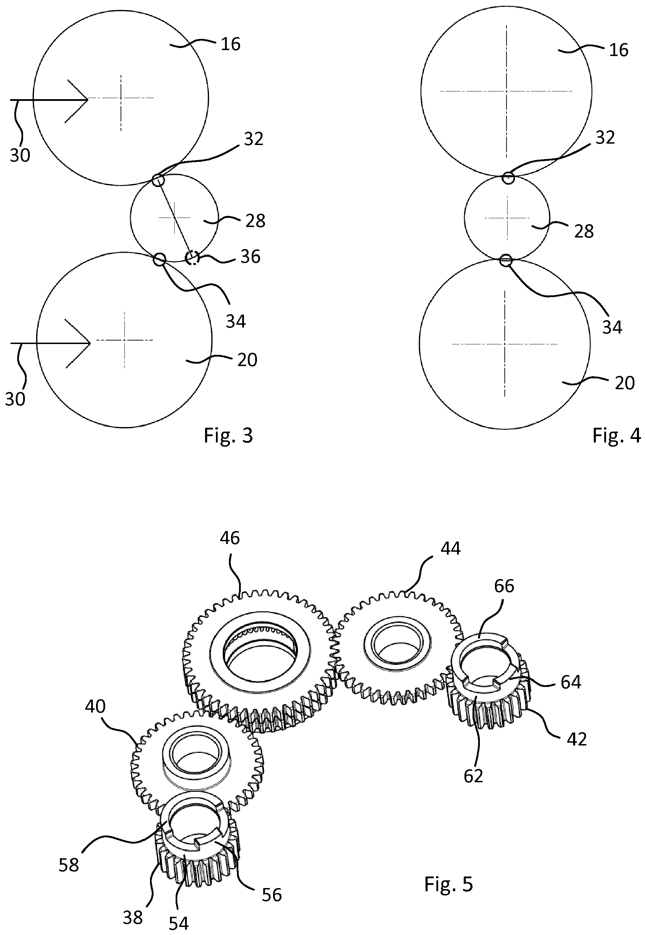

Das Gewinderollen bzw. Gewindewalzen im Einstichverfahren mit Tangentialgewinderollköpfen geschieht durch seitlichen Vorschub auf das zu bearbeitende Werkstück bis zur Achsenmitte und wieder zurück. Befindet sich das zu bearbeitende Werkstück mit seiner Achse auf der Verbindungslinie zwischen den Drehachsen der Gewinderollen, kämmen die Wälzpunkte am Werkstück an um 180° versetzten Orten. Zu Beginn und am Ende des Walzvorgangs ist dies allerdings nicht der Fall, wie nachfolgend anhand der Figuren 3 und 4 noch erläutert werden wird. Um dennoch sicherzustellen, dass das Gewindeprofil einer Gewinderolle exakt in die von dem Gewindeprofil der anderen Gewinderolle am Werkstück gebildeten Gewindefurchen eingreift, besitzen die Gewindeprofile der beiden Gewinderollen einen räumlichen Versatz zueinander. Dieses sogenannte Versatzmaß ist für den Bearbeitungserfolg zwingend. Durch das Erfordernis des Versatzmaßes ist es im Stand der Technik erforderlich, zwei voneinander verschiedene Gewinderollen mit zueinander versetzten Gewindeabwicklungen zu fertigen. Hierdurch erhöht sich der Fertigungsaufwand. Außerdem führt ein im Stand der Technik mögliches Vertauschen der Gewinderollen aufgrund der zueinander versetzten Gewindeprofile zu einem Schaden und Funktionsverlust bei der Bearbeitung.

Weitere Gewinderollköpfe sind bekannt aus US 3,353,390 A, CH 420 031 A, US 2,699,077 A, US 3,048,064 A, US 2,257,234 A und DE 1 012 893 B.

Ausgehend von dem erläuterten Stand der Technik liegt der Erfindung die Aufgabe zugrunde, einen Tangentialgewinderollkopf der eingangs genannten Art bereitzustellen, mit dem das für die Bearbeitung erforderliche Versatzmaß der Gewindeprofile der Gewinderollen in herstellungstechnisch einfacher und betriebssicherer Weise realisiert werden kann.

Die Erfindung löst die Aufgabe durch den Gegenstand des unabhängigen Anspruchs 1. Vorteilhafte Ausgestaltungen finden sich in den abhängigen Ansprüchen, der Beschreibung und den Figuren.

Für einen Tangentialgewinderollkopf der eingangs genannten Art löst die Erfindung die Aufgabe dadurch, dass die beiden Gewinderollen einschließlich eines jeweils auf ihrer Umfangsfläche ausgebildeten Gewindeprofils identisch ausgebildet sind, und dass in der Montageposition die Drehlage für die beiden Gewinderollen unterschiedlich ist, so dass die Gewindeprofile der Gewinderollen in der Montageposition einen Versatz zueinander besitzen.

Der erfindungsgemäße Tangentialgewinderollkopf besitzt in an sich bekannter Weise zwei Rollkopfarme, in denen jeweils eine Gewinderolle aufgenommen ist. Die Rollkopfarme können an einem Rollkopfhalter gehalten sein. Die beiden Gewinderollen sind jeweils auf einer Achse drehbar gelagert. Die Drehachsen der Gewinderollen verlaufen parallel zueinander. Die Gewinderollen sind über ein Getriebe, insbesondere ein Synchrongetriebe, miteinander gekoppelt. Die Gewinderollen können zum Erreichen der Montageposition seitlich in die Rollkopfarme eingeschoben werden. In der Montageposition können die Drehachsen in die Gewinderollen eingeschoben werden.

Die Gewinderollen weisen Rolleneingriffsmittel auf, die mit Getriebeeingriffsmitteln des Getriebes in Eingriff stehen. Die Rolleneingriffsmittel und die Getriebeeingriffsmittel sind derart ausgebildet, dass die Gewinderollen jeweils nur in einer einzigen definierten Drehlage seitlich in die Montageposition eingeschoben werden können, wobei die Drehlage für die beiden Gewinderollen unterschiedlich ist. In der Montageposition besitzen die Gewindeprofile der erfindungsgemäß identisch ausgebildeten Gewinderollen daher einen Versatz zueinander. Die Rolleneingriffsmittel und die Getriebeeingriffsmittel bilden eine geometrische Form, die die Gewinderollen mit dem Getriebe koppelt. Erfindungsgemäß werden diese geometrischen Formen für die beiden Gewinderollen definiert zueinander verdreht, wobei die Verdrehung das erforderliche Versatzmaß zwischen den Gewindeprofilen abbildet. Die Gewinderollen und damit die Startpunkte der Gewindeprofile auf den Umfangsflächen der Gewinderollen sind in der Montageposition um das erforderliche Versatzmaß zueinander versetzt. Dadurch können erfindungsgemäß die Gewinderollen einschließlich ihres Gewindeprofils identisch ausgebildet werden. Das erforderliche Versatzmaß ergibt sich automatisch und zuverlässig im Zuge des Einbaus der Gewinderollen in den Tangentialgewinderollkopf. Die Herstellung der Gewinderollen wird vereinfacht und die Betriebssicherheit durch Vermeiden eines die Funktion beeinträchtigenden Vertauschens der Gewinderollen erhöht.

Nach einer besonders praxisgemäßen Ausgestaltung können die Rolleneingriffsmittel durch Klauen der Gewinderollen gebildet sein und die Getriebeeingriffsmittel können durch Klauen von Ritzeln des Getriebes gebildet sein. Die Klauen der Gewinderollen greifen dann jeweils in die Klauen eines Ritzels ein. Die Klauen der Gewinderollen und die Klauen der Ritzel können komplementär zueinander ausgebildet sein. Die Gewinderollen können jeweils ein Paar einander gegenüberliegender Klauen besitzen und/oder die Ritzel können jeweils ein Paar einander gegenüberliegender Klauen besitzen.

Nach einer weiteren besonders praxisgemäßen Ausgestaltung können die Gewinderollen und die Ritzel jeweils auf einer gemeinsamen Achse angeordnet sein. Durch diese Ausgestaltung wird die Montage weiter vereinfacht. Zum Einsetzen der Achsen können die Gewinderollen und die Ritzel jeweils Lagerbohrungen aufweisen, die in der Montageposition der Gewinderollen miteinander fluchten. Wie erläutert, verlaufen die Achsen insbesondere parallel zueinander.

Die Klauen der Gewinderollen können nach einer weiteren Ausgestaltung jeweils mindestens eine Anschlagsfläche bilden, wobei die Anschlagsflächen in der Montageposition an den Klauen der Ritzel anschlagen. Beispielsweise im Stand der Technik nach der EP 0 811 443 B1 besteht das Problem, dass zueinander komplementäre spitze Winkel der Klauenenden von Gewinderollen und Ritzeln aufgrund unvermeidbarer Herstellungstoleranzen nicht exakt gleich groß ausgebildet werden können. Im Ergebnis werden die Klauen der Ritzel etwas kleiner ausgebildet als die entsprechende, durch die Klauen der Gewinderolle gebildete spitzwinklig zulaufende Aufnahme. Dadurch wiederum wird die Gewinderolle beim vollständigen Einschieben in das Ritzel etwas zu weit eingeschoben, so dass die Lagerbohrungen von Gewinderolle und Ritzel nicht exakt miteinander fluchten. Es ist dann in der Praxis aufwendig, die gemeinsame Drehachse durch das Ritzel und die Gewinderolle zu schieben. Dieses Problem wird bei der vorgenannten Ausgestaltung der Erfindung überwunden, indem durch eine definierte Anschlagsfläche ein Anschlag gebildet wird, bei dessen Erreichen die Lagerbohrungen von Gewinderolle und Ritzel exakt miteinander fluchten. Die Montage der gemeinsamen Drehachse ist entsprechend vereinfacht.

Die Anschlagsflächen können einen gekrümmten Verlauf besitzen, beispielsweise einen kreisförmig gekrümmten Verlauf. Dabei können die Anschlagsflächen an den Außendurchmesser des Ritzels angepasst sein. Es wird auf diese Weise eine besonders einfache Selbstzentrierung erreicht. Auch möglich ist es beispielsweise, dass die Anschlagsflächen zumindest abschnittsweise quer zur Einschubrichtung der Gewinderollen in die Montageposition verlaufen.

Die Anschlagsflächen können weiterhin jeweils durch einen zwei einander gegenüberliegende Klauenabschnitte der Gewinderollen verbindenden Anschlagsabschnitt gebildet sein. Bei dieser Ausgestaltung ist es möglich, dass jede Gewinderolle nur eine Klaue besitzt. Diese Klaue besitzt zwei einander gegenüberliegende Klauenabschnitte, die durch den Anschlagsabschnitt miteinander verbunden sind. Das zugeordnete Ritzel kann dagegen zwei Klauen besitzen.

Nach einer weiteren Ausgestaltung kann vorgesehen sein, dass die Anschlagsabschnitte gegenüber den einander gegenüberliegenden Klauenabschnitten jeweils eine geringere Dicke besitzen, so dass zwischen den einander gegenüberliegenden Klauenabschnitten jeweils eine durch die Anschlagsfläche begrenzte Aufnahme für eine komplementär ausgebildete Klaue des zugeordneten Ritzels gebildet ist. Es wird also eine taschenförmige Aufnahme gebildet, seitlich begrenzt durch die Enden der einander gegenüberliegenden Klauenabschnitte. Der Boden der Aufnahme wird durch die Anschlagsfläche des Anschlagabschnitts gebildet. In dieser taschenförmigen Aufnahme wird eine Klaue des jeweils zugeordneten Ritzels aufgenommen. Nach einer weiteren Ausgestaltung können die Aufnahmen der beiden Gewinderollen unterschiedlich breit sein.

Nach einer weiteren besonders praxisgemäßen Ausgestaltung können die Ritzel und mit ihnen in Eingriff stehende Zahnräder des Getriebes mit optischen Markierungen versehen sein, die die vorgesehene Einbauposition der Ritzel relativ zu den mit ihnen in Eingriff stehenden Zahnrädern anzeigen. Die optischen Markierungen können beispielsweise durch an den Ritzeln und den zugeordneten Zahnrädern angebrachte Punkt- oder Strichmarkierungen gebildet sein. Die zeigen die für den Betrieb des Tangentialgewinderollkopfes vorgesehene Drehposition der Ritzel und Zahnräder an, so dass insbesondere sichergestellt ist, dass die mit den Ritzeln in Eingriff kommenden Gewinderollen in der vorgesehenen Drehlage eingebaut werden. Auch kann vorgesehen sein, dass die mit den Ritzeln in Eingriff stehenden Zahnräder und ein mit diesen wiederum in Eingriff stehendes Koppelzahnrad des Getriebes mit optischen Markierungen versehen sind, die die vorgesehene Einbauposition der Zahnräder relativ zu dem Koppelzahnrad anzeigen. Wiederum können die optischen Markierungen durch an dem Koppelzahnrad und an den Zahnrädern angebrachte (weitere) Punkt- oder Strichmarkierungen gebildet sein.

Der erfindungsgemäße Tangentialgewinderollkopf besitzt wie erläutert zwei Rollkopfarme, die jeweils eine der Gewinderollen aufnehmen. Es ist möglich, dass die Rollkopfarme relativ zueinander nicht beweglich, insbesondere nicht verschwenkbar, sind. Es handelt sich dann also um einen Tangentialgewinderollkopf mit feststehenden Rollkopfarmen, die beispielsweise einstückig mit einem Rollkopfhalter ausgebildet sein können. Gerade bei solchen Tangentialgewinderollköpfen mit feststehenden Rollkopfarmen ist die Erfindung besonders vorteilhaft, da die Gewinderollen eine fest definierte Position zueinander besitzen. Das erforderliche Versatzmaß kann so in besonders sicherer Weise durch die vorgegebenen unterschiedlichen Drehlagen der Gewinderollen realisiert werden.

Es ist aber grundsätzlich auch möglich, dass der Tangentialgewinderollkopf einen Rollkopfhalter umfasst, an dem die Rollkopfarme um eine gemeinsame, parallel zu den Rollenachsen verlaufende Achse schwenkbar gelagert sind. Der Tangentialgewinderollkopf kann dann weiterhin Einstellmittel zur Einstellung der Schwenklage der Rollkopfarme an dem Rollkopfhalter besitzen.

Ausführungsbeispiele der Erfindung werden nachfolgend anhand von Zeichnungen näher erläutert. Es zeigen schematisch:
- Fig. 1: einen erfindungsgemäßen Tangentialgewinderollkopf nach einem ersten Ausführungsbeispiel in einer perspektivischen Ansicht,
- Fig. 2: einen erfindungsgemäßen Tangentialgewinderollkopf nach einem zweiten Ausführungsbeispiel in einer perspektivischen Ansicht,
- Fig. 3: eine schematische Darstellung zur Veranschaulichung des Bearbeitens eines Werkstücks in einem Tangentialgewinderollkopf,
- Fig. 4: eine weitere schematische Darstellung zur Veranschaulichung des Bearbeitens eines Werkstücks in einem Tangentialgewinderollkopf,
- Fig. 5: ein die Gewinderollen eines erfindungsgemäßen Tangentialgewinderollkopfes koppelndes Gewinde in einer perspektivischen Ansicht,
- Fig. 6: eine Gewinderolle eines erfindungsgemäßen Tangentialgewinderollkopfes in einer perspektivischen Ansicht,
- Fig. 7: ein Ritzel des in Fig. 5 gezeigten Getriebes im mit der Gewinderolle aus Fig. 6 zusammenwirkenden Zustand in einer perspektivischen Ansicht,
- Fig. 8: ein Ritzel des in Fig. 5 gezeigten Getriebes im mit der Gewinderolle aus Fig. 6 zusammenwirkenden Zustand bei in die Gewinderolle und das Ritzel eingesetzter Drehachse in einer Seitenansicht, und
- Fig. 9: eine Ansicht des in Fig. 5 gezeigten Getriebes von der in Fig. 5 verdeckten Seite.

Soweit nichts anderes angegeben ist, bezeichnen in den Figuren gleiche Bezugszeichen gleiche Gegenstände.

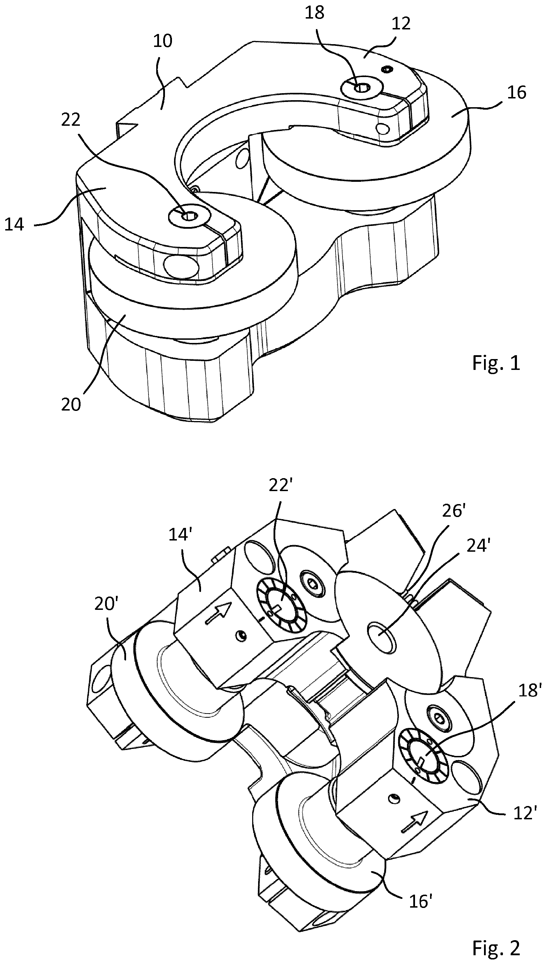

Der in Fig. 1 gezeigte erfindungsgemäße Tangentialgewinderollkopf umfasst einen Rollkopfhalter 10, an dem ein erster gabelförmiger Rollkopfarm 12 und ein zweiter gabelförmiger Rollkopfarm 14 einstückig und feststehend ausgebildet sind. In dem ersten Rollkopfarm 12 ist eine erste Gewinderolle 16 auf einer Achse 18 drehbar gelagert. In dem zweiten Rollkopfarm 14 ist eine zweite Gewinderolle 20 auf einer Achse 22 drehbar gelagert. Die Achsen 18, 22 verlaufen parallel zueinander. Der grundsätzliche Aufbau und die Funktion eines solchen Tangentialgewinderollkopfes sind bekannt und werden daher nicht näher erläutert.

Fig. 2 zeigt eine alternative Form eines erfindungsgemäßen Tangentialgewinderollkopfes. Dieser Tangentialgewinderollkopf besitzt ebenfalls zwei Rollkopfarme 12', 14', in denen erste und zweite Gewinderollen 16', 20' auf Achsen 18', 22' drehbar gelagert sind. Wiederum verlaufen die Achsen 18', 22' parallel zueinander. Im Unterschied zu dem Tangentialgewinderollkopf aus Fig. 1 sind bei dem Tangentialgewinderollkopf der Fig. 2 die Rollkopfarme 12', 14' um eine gemeinsame, parallel zu den Rollachsen 18', 22' verlaufende Achse 24' schwenkbar gelagert. Bei dem Bezugszeichen 26' ist eine Einstellfeder erkennbar, und es sind nicht näher dargestellte Gewindemittel gezeigt, über die die Schwenklage der Rollkopfarme 12', 14' eingestellt werden kann. Auch die Ausgestaltung und Funktion eines solchen Tangentialgewinderollkopfes mit verschwenkbaren Rollkopfarmen ist an sich bekannt und soll daher nicht näher erläutert werden.

Anhand der Figuren 3 und 4 soll die Bearbeitung eines bei dem Bezugszeichen 28 gezeigten zylindrischen Werkstücks beispielhaft in dem Tangentialgewinderollkopf der Fig. 1 erläutert werden. Fig. 3 zeigt den Beginn des Gewinderollvorgangs. Dabei werden Gewinderollen 16, 20 und Werkstück 28 entlang der durch die Pfeile 30 veranschaulichten Vorschubrichtung aufeinander zugestellt, bis zum Erreichen der in Fig. 4 gezeigten Position. Anschließend werden Gewinderollen 16, 20 und Werkstück 28 wieder voneinander entfernt. In Fig. 4 steht die erste Gewinderolle 16 mit dem Werkstück 28 entlang des Eingriffsorts 32 in Eingriff und die zweite Gewinderolle 20 kommt mit dem Werkstück 28 entlang des Eingriffsorts 34 in Eingriff. Die Eingriffsorte 32, 34 liegen zu dem in Fig. 4 dargestellten Bearbeitungszeitpunkt um 180° versetzt zueinander. Zu Bearbeitungsbeginn, wie in Fig. 3 dargestellt, liegen diese Eingriffsorte allerdings nicht um 180° versetzt. Der um 180° versetzte theoretische Eingriffsort ist in Fig. 3 bei dem Bezugszeichen 36 gestrichelt veranschaulicht. Tatsächlich erfolgt der Eingriff der zweiten Gewinderolle 20 zu Bearbeitungsbeginn aber am Eingriffsort 34. Aus diesem Grund müssen die Gewindeprofile der Gewinderollen 16, 20 um ein definiertes Versatzmaß zueinander versetzt sein, wie eingangs erläutert.

In Fig. 5 ist ein Getriebe eines erfindungsgemäßen Tangentialgewinderollkopfes gezeigt, das beispielsweise bei den in den Figuren 1 und 2 dargestellten Tangentialgewinderollköpfen zum Einsatz kommen kann. Das Getriebe weist ein erstes Ritzel 38 auf, das mit einem ersten Zahnrad 40 kämmt. Ein zweites Ritzel 42 kämmt mit einem zweiten Zahnrad 44. Das erste Zahnrad 40 und das zweite Zahnrad 44 kämmen mit unterschiedlichen, relativ zueinander bewegbaren Zahnradebenen eines zentralen Koppelzahnrads 46. Der Aufbau und die Funktion eines solchen in Tangentialgewinderollköpfen genutzten Synchrongetriebes sind an sich bekannt.

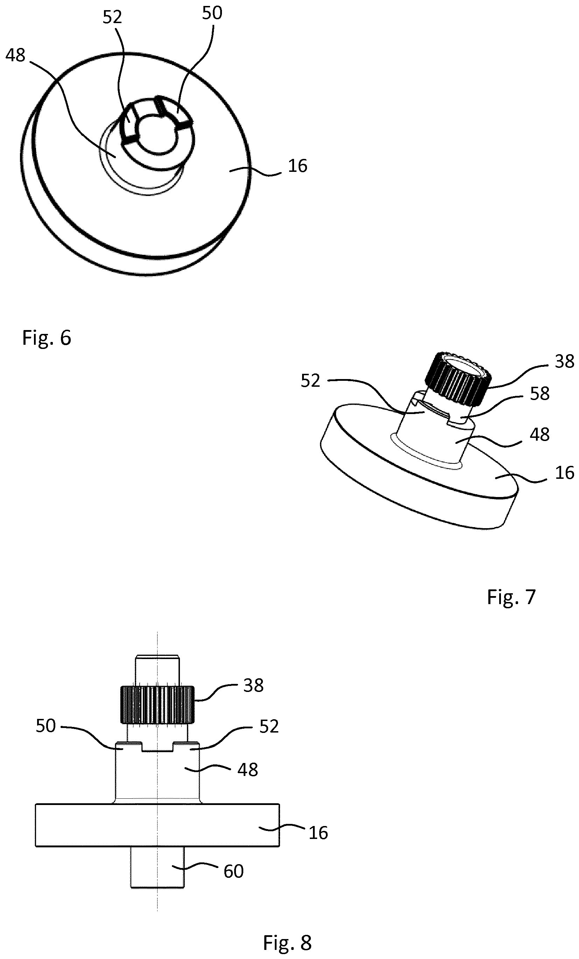

Die erfindungsgemäße Besonderheit liegt in dem Zusammenwirken der Gewinderollen mit den Ritzeln 38, 42. Dieses Zusammenwirken wird anhand der Figuren 6 bis 8 näher erläutert, vorliegend beispielhaft für die Gewinderollen 16 und 20. Für die Gewinderollen 16' und 20' erfolgt dieses Zusammenwirken in entsprechender Weise. Die erste Gewinderolle 16 besitzt einen hohlzylindrischen Fortsatz 48, an dem in dem dargestellten Beispiel zwei Klauen 50, 52 ausgebildet sind. Das erste Ritzel 38 besitzt ebenfalls einen hohlzylindrischen Fortsatz 54, an dem in dem gezeigten Beispiel ebenfalls zwei Klauen 56, 58 ausgebildet sind. Durch seitliches Einschieben der ersten Gewinderolle 16 in den Rollkopfarm des Tangentialgewinderollkopfes gelangen die Klauen 50, 52 der ersten Gewinderolle 16 in Eingriff mit den komplementär ausgebildeten Klauen 56, 58 des ersten Ritzels 38, wie in Fig. 7 zu erkennen. Durch die komplementär ausgebildeten Klauen 56, 58 bzw. 50, 52 kann die Gewinderolle 16 nur in einer einzigen definierten Drehlage mit dem ersten Ritzel 38 in Eingriff kommen. In dieser Montageposition der ersten Gewinderolle 16 kann eine gemeinsame Drehachse 60 in die durch die hohlzylindrischen Fortsätze 54 bzw. 48 definierten Lagerbohrungen des ersten Ritzels 38 und der ersten Gewinderolle 16 eingeschoben werden, wie in Fig. 8 gezeigt.

Das zweite Ritzel 42 des in Fig. 5 gezeigten Getriebes besitzt ebenfalls einen hohlzylindrischen Fortsatz 62, der wiederum eine Lagerbohrung für eine Drehachse definiert. An dem hohlzylindrischen Fortsatz 62 sind wiederum zwei Klauen 64 und 66 ausgebildet. Die Klauen 64 und 66 sind grundsätzlich identisch zu den Klauen 56 und 58 des ersten Ritzels 38 ausgebildet. Außerdem sind die ersten und zweiten Gewinderollen 16, 20 des in Fig. 1 gezeigten Tangentialgewinderollkopfes identisch ausgebildet, einschließlich ihrer auf der Umfangsfläche gebildeten Gewindeprofile. Auch die ersten und zweiten Gewinderollen 16', 20' des in Fig. 2 gezeigten Tangentialgewinderollkopfes sind identisch ausgebildet, einschließlich ihrer auf der Umfangsfläche gebildeten Gewindeprofile. Das zweite Ritzel 42 ist allerdings gegenüber dem ersten Ritzel 38 um einen definierten Winkel verdreht angeordnet. Wird nun die zweite Gewinderolle 20 mit ihren Klauen unter Eingriff mit den Klauen 64, 66 des zweiten Ritzels 42 ebenso wie die ersten Gewinderolle 16 in ihre Montageposition gebracht, sind die Gewinderollen 16, 20 ebenfalls um diesen definierten Winkel zueinander verdreht. Damit besitzen die auf der Umfangsfläche der Gewinderollen 16, 20 ausgebildeten Gewindeprofile einen definierten Versatz zueinander, insbesondere liegen die Startpunkte der Gewindeprofile um ein definiertes Versatzmaß auseinander.

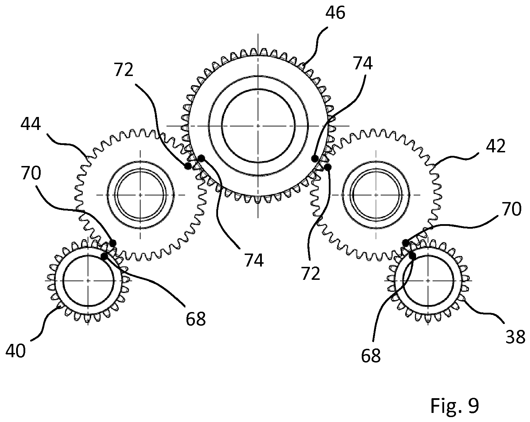

Um den korrekten Einbau der Ritzel 38, 42 in das Getriebe zu gewährleisten, insbesondere die korrekte Drehlage der Ritzel 38, 42, kann eine entsprechende Markierung an dem Tangentialgewinderollkopf und an den Ritzeln 38, 42 vorgesehen sein, die entsprechend durch den Bearbeiter beim Einbau der Ritzel 38, 42 zu beachten ist. Dies ist in Fig. 9 anhand eines Beispiels erläutert. Dabei sind auf den Ritzeln 38 und 42 sowie den mit diesen in Eingriff stehenden Zahnrädern 42 und 44 Punktmarkierungen 68, 70 zu erkennen, die die vorgesehene Einbauposition der Ritzel 38, 42 und Zahnräder 42, 44 zueinander anzeigen. Die Zahnräder 42, 44 besitzen darüber hinaus zweite Punktmarkierungen 72, die bei der Montage des Getriebes entsprechend mit Punktmarkierungen 74 des Koppelzahnrads 46 in Überdeckung gebracht werden. Auf diese Weise ist sichergestellt, dass die Ritzel und Zahnräder des Getriebes in der richtigen Drehlage zusammengesetzt werden und damit auch die Gewinderollen in der vorgesehenen Drehlage mit dem erforderlichen Versatzmaß eingesetzt werden.

### Bezugszeichenliste

- 10: Rollkopfhalter
- 12: Erster Rollkopfarm
- 12': Erster Rollkopfarm
- 14: Zweiter Rollkopfarm
- 14': Zweiter Rollkopfarm
- 16: Erste Gewinderolle
- 16': Erste Gewinderolle
- 18: Achse
- 18': Achse
- 20: Zweite Gewinderolle
- 20': Zweite Gewinderolle
- 22: Achse
- 22': Achse
- 24': Achse
- 26': Einstellfeder
- 28: Zylindrisches Werkstück
- 30: Pfeile
- 32: Eingriffsort
- 34: Eingriffsort
- 36: Theoretischer Eingriffsort
- 38: Erstes Ritzel
- 40: Erstes Zahnrad
- 42: Zweites Ritzel
- 44: Zweites Zahnrad
- 46: Koppelzahnrad
- 48: Hohlzylindrischer Fortsatz
- 50: Klaue
- 52: Klaue
- 54: Hohlzylindrischer Fortsatz
- 56: Klaue
- 58: Klaue
- 60: Drehachse
- 62: Hohlzylindrischer Fortsatz
- 64: Klaue
- 66: Klaue
- 68: Punktmarkierung
- 70: Punktmarkierung
- 72: Punktmarkierung
- 74: Punktmarkierung

## Patentansprüche

1. Tangentialgewinderollkopf umfassend zwei gabelförmige Rollkopfarme (12, 12', 14, 14'), in denen jeweils eine Gewinderolle (16, 16', 20, 20') auf einer Achse (18, 18', 22, 22') drehbar gelagert ist, wobei die Gewinderollen (16, 16', 20, 20') jeweils mit einem die Gewinderollen (16, 16', 20, 20') koppelnden Getriebe in Eingriff stehen, und wobei die Gewinderollen (16, 16', 20, 20') vor dem Einbau der Achsen (18, 18', 22, 22') seitlich in eine Montageposition in die Rollkopfarme (12, 12', 14, 14') einschiebbar sind, in welcher jeweils eine der Achsen (18, 18', 22, 22') in eine Lagerbohrung der Gewinderollen (16, 16', 20, 20') eingeschoben werden kann, wobei die Gewinderollen (16, 16', 20, 20') Rolleneingriffsmittel aufweisen, die mit Getriebeeingriffsmitteln des Getriebes in Eingriff stehen, und wobei die Rolleneingriffsmittel und die Getriebeeingriffsmittel derart ausgebildet sind, dass die Gewinderollen (16, 16', 20, 20') jeweils nur in einer einzigen definierten Drehlage seitlich in die Montageposition eingeschoben werden können, **dadurch gekennzeichnet, dass** die beiden Gewinderollen (16, 16', 20, 20') einschließlich eines jeweils auf ihrer Umfangsfläche ausgebildeten Gewindeprofils identisch ausgebildet sind, und dass in der Montageposition die Drehlage für die beiden Gewinderollen (16, 16', 20, 20') unterschiedlich ist, so dass die Gewindeprofile der Gewinderollen (16, 16', 20, 20') in der Montageposition einen Versatz zueinander besitzen.

2. Tangentialgewinderollkopf nach Anspruch 1, **dadurch gekennzeichnet, dass** die Rolleneingriffsmittel durch Klauen (50, 52) der Gewinderollen (16, 16', 20, 20') gebildet sind, und dass die Getriebeeingriffsmittel durch Klauen (56, 58, 64, 66) von Ritzeln (38, 42) des Getriebes gebildet sind.

3. Tangentialgewinderollkopf nach Anspruch 2, **dadurch gekennzeichnet, dass** die Klauen (50, 52) der Gewinderollen (16, 16', 20, 20') und die Klauen (56, 58, 64, 66) der Ritzel (38, 42) komplementär zueinander ausgebildet sind.

4. Tangentialgewinderollkopf nach einem der Ansprüche 2 oder 3, **dadurch gekennzeichnet, dass** die Gewinderollen (16, 16', 20, 20') und die Ritzel (38, 42) jeweils auf einer gemeinsamen Achse (18, 18', 22, 22') angeordnet sind.

5. Tangentialgewinderollkopf nach einem der Ansprüche 2 bis 4, **dadurch gekennzeichnet, dass** die Klauen (50, 52) der Gewinderollen (16, 16', 20, 20') jeweils mindestens eine Anschlagsfläche bilden, wobei die Anschlagsflächen in der Montageposition an den Klauen (56, 58, 64, 66) der Ritzel (38, 42) anschlagen.

6. Tangentialgewinderollkopf nach Anspruch 5, **dadurch gekennzeichnet, dass** die Anschlagsflächen jeweils durch einen zwei einander gegenüberliegende Klauenabschnitte der Gewinderollen (16, 16', 20, 20') verbindenden Anschlagsabschnitt gebildet sind.

7. Tangentialgewinderollkopf nach Anspruch 6, **dadurch gekennzeichnet, dass** die Anschlagsabschnitte gegenüber den einander gegenüberliegenden Klauenabschnitten jeweils eine geringere Dicke besitzen, so dass zwischen den einander gegenüberliegenden Klauenabschnitten jeweils eine durch die Anschlagsfläche begrenzte Aufnahme für eine komplementär ausgebildete Klaue (56, 58, 64, 66) des zugeordneten Ritzels (38, 42) gebildet ist.

8. Tangentialgewinderollkopf nach einem der Ansprüche 2 bis 7, **dadurch gekennzeichnet, dass** die Ritzel (38, 42) und mit ihnen in Eingriff stehende Zahnräder des Getriebes mit optischen Markierungen (68, 70, 72, 74) versehen sind, die die vorgesehene Einbauposition der Ritzel (38, 42) relativ zu den mit ihnen in Eingriff stehenden Zahnrädern anzeigen.

9. Tangentialgewinderollkopf nach einem der vorhergehenden Ansprüche, **dadurch gekennzeichnet, dass** die Rollkopfarme (12, 12', 14, 14') relativ zueinander nicht beweglich sind.

## Claims

1. A tangential thread rolling head comprising two fork-shaped rolling head arms (12, 12', 14, 14'), in each of which a thread roller (16, 16', 20, 20') is rotatably mounted on an axis (18, 18', 22, 22'), wherein the thread rollers (16, 16', 20, 20') are each in engagement with a gear which couples the thread rollers (16, 16', 20, 20'), and wherein the thread rollers (16, 16', 20, 20') can be inserted laterally into a mounting position in the rolling head arms (12, 12', 14, 14') prior to the installation of the axes (18, 18', 22, 22'), in which mounting position one of the axes (18, 18', 22, 22') can in each case be inserted into a bearing bore of the thread rollers (16, 16', 20, 20'), wherein the thread rollers (16, 16', 20, 20') have roller engagement means which are in engagement with gear engagement means of the gear, and wherein the roller engagement means and the gear engagement means are configured in such a way that the thread rollers (16, 16', 20, 20') can in each case only be inserted laterally into the mounting position in a single defined rotational position, **characterized in that** the two thread rollers (16, 16', 20, 20') including a thread profile configured in each case on their peripheral surface are configured identically, and in the mounting position the rotational position is different for the two thread rollers (16, 16', 20, 20') so that the thread profiles of the thread rollers (16, 16', 20, 20') have an offset from each other in the mounting position.

2. The tangential thread rolling head according to Claim 1, **characterized in that** the roller engagement means are formed by claws (50, 52) of the thread rollers (16, 16', 20, 20'), and the gear engagement means are formed by claws (56, 58, 64, 66) of pinions (38, 42) of the gear.

3. The tangential thread rolling head according to Claim 2, **characterized in that** the claws (50, 52) of the thread rollers (16, 16', 20, 20') and the claws (56, 58, 64, 66) of the pinions (38, 42) are configured in a complementary manner to one another.

4. The tangential thread rolling head according to any one of Claims 2 or 3, **characterized in that** the thread rollers (16, 16', 20, 20') and the pinions (38, 42) are each arranged on a common axis (18, 18', 22, 22').

5. The tangential thread rolling head according to any one of Claims 2 to 4, **characterized in that** the claws (50, 52) of the thread rollers (16, 16', 20, 20') each form at least one stop surface, wherein the stop surfaces abut against the claws (56, 58, 64, 66) of the pinions (38, 42) in the mounting position.

6. The tangential thread rolling head according to Claim 5, **characterized in that** the stop surfaces are each formed by a stop section connecting two claw sections of the thread rollers (16, 16', 20, 20'), which are located opposite one another.

7. The tangential thread rolling head according to Claim 6, **characterized in that** the stop sections each have a smaller thickness with respect to the claw sections which are located opposite one another, so that a receptacle delimited by the stop surface for a complementarily configured claw (56, 58, 64, 66) of the assigned pinion (38, 42) is formed in each case between the claw sections which are located opposite one another.

8. The tangential thread rolling head according to any one of Claims 2 to 7, **characterized in that** the pinions (38, 42) and cogs of the gear in engagement with them are provided with visual markings (68, 70, 72, 74) which indicate the envisaged installation position of the pinions (38, 42) relative to the cogs in engagement with them.

9. The tangential thread rolling head according to any one of the preceding claims, **characterized in that** the rolling head arms (12, 12', 14, 14') cannot be moved relative to one another.

## Revendications

1. Tête de roulage de filets tangentielle comprenant deux bras de tête à rouler en forme d'étrier (12, 12', 14, 14'), à l'intérieur desquels est monté respectivement un galet de filetage (16, 16', 20, 20') pouvant pivoter sur un axe (18, 18', 22, 22'), dans laquelle les galets de filetage (16, 16', 20, 20') sont respectivement en prise avec un engrenage accouplant les galets de filetage (16, 16', 20, 20'), et dans laquelle les galets de filetage (16, 16', 20, 20') sont insérables latéralement à l'intérieur des bras de tête à rouler (12, 12', 14, 14') avant la mise en place des axes (18, 18', 22, 22') dans une position de montage, où respectivement un des axes (18, 18', 22, 22') peut être introduit à l'intérieur d'un alésage de palier des galets de filetage (16, 16', 20, 20'), dans laquelle les galets de filetage (16, 16', 20, 20') présentent des moyens de prise des galets, qui s'engrènent avec les moyens de prise de l'engrenage de l'engrenage, et dans laquelle les moyens de prise des galets et les moyens de prise de l'engrenage sont conçus de telle façon que les galets de filetage (16, 16', 20, 20') ne sont insérables latéralement respectivement en position de montage que dans une seule position de pivotement définie, **caractérisée en ce que** les deux galets de filetage (16, 16', 20, 20') y compris un profil de filetage conçu respectivement sur leur surface périphérique sont constitués de manière identique, et que la position de pivotement des deux galets de filetage (16, 16', 20, 20') est différente dans la position de montage, de sorte que les profils de filetage des galets de filetage (16, 16', 20, 20') sont décalés l'un par rapport à l'autre dans la position de montage.

2. Tête de roulage de filets tangentielle selon la revendication 1, **caractérisée en ce que** les moyens de prise des galets sont formés par des crabots (50, 52) des galets de filetage (16, 16', 20, 20') et que les moyens de prise de l'engrenage sont formés par des crabots (56, 58, 64, 66) de pignons (38, 42) de l'engrenage.

3. Tête de roulage de filets tangentielle selon la revendication 2, **caractérisée en ce que** les crabots (50, 52) des galets de filetage (16, 16', 20, 20') et les crabots (56, 58, 64, 66) des pignons (38, 42) sont conçus de manière à être complémentaires les uns des autres.

4. Tête de roulage de filets tangentielle selon l'une des revendications 2 ou 3, **caractérisée en ce que** les galets de filetage (16, 16', 20, 20') et les pignons (38, 42) sont disposés respectivement sur un axe commun (18, 18', 22, 22').

5. Tête de roulage de filets tangentielle selon l'une des revendications 2 à 4, **caractérisée en ce que** les crabots (50, 52) des galets de filetage (16, 16', 20, 20') forment respectivement au moins une surface de butée, dans laquelle les surfaces de butée se calent contre les crabots (56, 58, 64, 66) des pignons (38, 42) dans la position de montage.

6. Tête de roulage de filets tangentielle selon la revendication 5, **caractérisée en ce que** les surfaces de butée sont formées respectivement par une partie de butée reliant deux parties de crabot opposées l'une à l'autre des galets de filetage (16, 16', 20, 20').

7. Tête de roulage de filets tangentielle selon la revendication 6, **caractérisée en ce que** les parties de butée possèdent respectivement une moindre épaisseur par rapport aux parties de crabot opposées l'une à l'autre, de sorte qu'un logement limité par la surface de butée pour un crabot (56, 58, 64, 66) conçu de manière complémentaire du pignon (38, 42) associé est formé respectivement entre les parties de crabot opposées l'une à l'autre.

8. Tête de roulage de filets tangentielle selon l'une des revendications 2 à 7, **caractérisée en ce que** les pignons (38, 42) et les roues dentées de l'engrenage se trouvant en prise avec eux sont pourvus de repères visuels (68, 70, 72, 74), qui indiquent la position de montage prévue des pignons (38, 42) par rapport aux roues dentées se trouvant en prise avec eux.

9. Tête de roulage de filets tangentielle selon l'une des revendications précédentes, **caractérisée en ce que** les bras de tête à rouler (12, 12', 14, 14') ne sont pas mobiles les uns par rapport aux autres.
